# EUROPEAN PATENT SPECIFICATION

(11) **EP 2 416 640 B1**
(45) Date of publication and mention of the grant of the patent: **16.07.2014**
(21) Application number: 10733054.0
(22) Date of filing: 08.04.2010
(51) Int. Cl.: A01B 49/06, A01B 59/042, A01C 7/06

(54) **COMBINED CULTIVATING MACHINE FOR TILLING WITH A ROTARY PLOUGH, SOIL FERTILIZING, PREPARING, STABILIZING AND SOWING OF CROPS**
KOMBINIERTE MASCHINE ZUR BODENBEARBEITUNG MIT EINEM DREHPFLUG, BODENDÜNGUNG, -AUFBEREITUNG UND -STABILISIERUNG SOWIE AUSSAAT
MACHINE DE CULTURE COMBINÉE POUR LABOURER À L'AIDE D'UNE CHARRUE ROTATIVE COMMANDÉE, FERTILISER, PRÉPARER ET STABILISER LE SOL ET SEMER LES CULTURES

(30) Priority: 10.04.2009 RS 9016709
(43) Date of publication of application: 15.02.2012
(73) Proprietor: Mandic, Stanko, 25223 Sivac (RS)
(72) Inventor: Mandic, Stanko, 25223 Sivac (RS)
(74) Representative: Vlahovic, Slobodan
(86) International application number: PCT/RS2010/000003
(87) International publication number: WO 2010/117290

(56) References cited:
- CA-A1- 2 354 980
- CN-A- 101 361 419
- DE-A1- 3 431 560
- DE-A1- 3 701 877

## Description

### Field of the invention

Present invention generally belongs to the field of human necessities, more precisely to the field of agriculture, even more precisely to the field of soil working in agriculture or forestry; parts, details or accessories of agricultural machines or implements in general, and most precisely to the field of combined machines with two or more soil-working tools of different kind.

According to the International Patent Classification (IPC), present invention is designated and classified by the general classification symbols: AOIB 49/02 which relates to a combined agricultural machine with two or more soil-working tools of different kind, and with AOIB 49/06 which relates to combinations of soil-working tools with non-soil-working tools e.g. planting tools or tools for sowing or fertilizing. Secondly, present invention can be classified with classification symbols: A01 B 5/10 which relates to ploughs with rolling non-driven tools, e.g. discs mounted or partly-mounted on tractors, AOIB 29/02 which relates to rollers with smooth surface, AOIB 31/00 which relates to drags and AOIC 7/00 which relates to sowing.

### Technical problem

Technical problem which present invention tries to solve is the following: how to devise a combined cultivating machine with a reversible plough that can perform tilling, soil preparation, sowing, fertilizing and treating with protection substances in just one single pass. In other words: how to provide the machine that can perform seven to nine different agro-technical operations simultaneously in order to cut down fuel and lubricant costs, shorten employed machine time and human labour time, lower the production cost, decrease soil compacting in order to create more suitable conditions for plant growing and achieving higher crop yields which, all combined, would justify the need for this machine in both economic and ecological terms.

### Background of the invention

Vast technical advances of the tools for agricultural cultivation that has been made in the last few decades has enabled modernization and improvement in the field of soil-working. Major goal that new systems for soil cultivation strive to achieve is to ease the process of food production, lower the costs and, thus, increase the profits. Development of the combined tractor mounted or pulled systems is advancing in the direction of achieving the process of so called "direct sowing". Main aim is to, on the basis of minimal cultivation effort and by using the so called "combined effort" machinery, achieve technical process of sowing in just a single pass. In order to accomplish such a technical procedure, it is necessary to employ combined aggregates and tractors with which one can form a combined tractor system. One of such systems for soil-working is known as "Conservation system for soil-working".

The majority of cultivated areas is processed by tilling with ploughs that are used in conventional soil-working. On small grains sown acres the harrows for so called "rational cultivation" are used. Recently, the usage of heavy tractors and machinery for processing and sowing has been applied. Beside using ploughs, soil processing is done by using harrows and combiners. Beside using these tools for sowing of crops that leave small amounts of plant residue, for sowing of small crops the combinations with active and passive tools, double-row grubers (as means for protective processing of soil) and tools for pre-sowing preparation are used as well.

Following patent applications can be characterized as the most relevant prior inventions for this patent application: DE 3701877A1, CA2354980A1, CN101361419A1 and DE3431560A1 but all of these solutions are completely different than invention in this application.

There exist many combinations and possible solutions for achieving sowing process in two or, possibly, only one pass. In practical implementation, most common are the following combined systems:
- tilling and earth preparation,
- processing without ploughing with soil preparation,
- soil preparation with fertilizing and sowing,
- soil processing and sowing,
- direct sowing.

Soil processing by using aforementioned tools implies that the soil processing is made in several passes which, in turn, implies that during one year period over twenty tons of load passes over each square meter of processed soil. This, in addition to increased cost for soil-work processing, adds to a significant increase of cost for spent fuel, human work and used working hours.

Current practice in soil-working implies usage of tractors as main actuation means and usage of cultivation tools: ploughs, harrows, tillers, combiners, planters, fertilizers and similar tools. Common technology of earth processing and sowing is mainly conducted by using the following agro-technical operations:
1. Tilling as a separate agro-technical operation,
2. Rough preparation of soil; harrowing takes a separate pass upon a tilled soil. In more harsh conditions, it takes even two or three passes of the harrows in order to prepare the soil properly, and this is more frequently the case when the tilling was performed at an earlier time so the soil is more clodded and it takes more passes to properly prepare the earth,
3. Fine preparation of soil by using combiners or similar combined machinery,
4. Sometimes it is necessary to perform rolling in order to stabilize and prepare the soil properly for seeding,
5. Fertilizing by using carried or pulled fertilizers as a separate pass,
6. Treating soil with protective substances as a separate pass,
7. Sowing of crops.

Research of the existing patent documents revealed that the number of similar submitted documents is rather small. For example, document YU P-643190 discloses a combined soil-working machine which can, in a single pass of a tractor, perform: tilling by means of a reversible plough, soil preparation for sowing, sowing, rolling and fertilizing with artificial fertilizer. All these tools are attached to the machine frame in a certain order - the fertilizer being the first attached tool and the roller for deep impressing of the seeds being the last. As a, means for soil tilling, there is a special rotary tool with low rotation speed which operates on a principle of cutting and milling of soil. This constructional solution implies usage of more shafts that are gradually positioned, where each shaft has several reversible ploughs attached.

Yet another document known from the YU patent application P-642190 describes a combination of reversible ploughs with planters for wide-row and four-row planting. This constructional solution achieves that the seeding operation is performed simultaneously with the operation of soil preparation and pre-seeding. A container with seeds and changeable dividing plates is attached on the back of the frame, behind the ploughs, while the pipes for conducting the seeds are raised above the ground, which differs this solution from the previously known ones.

However, cited known solutions are complicated, expensive and they do not deal with the main problem: providing the machine that can in almost single pass perform multiple soil-working operations like tilling, soil preparing, sowing, fertilizing and treating the soil with the protection substances (like herbicides); that is to perform seven to nine different agro-technical operations simultaneously in order to cut down fuel and lubricant costs, shorten the employed machine and human labour hours, lower the production cost, decrease soil compacting in order to create more suitable conditions for plant growing and achieving higher crop yields which, all combined, would justify the need for this machine in both economic and ecological terms.

### Summary of the invention

The present invention relates to a combined soil-working machine according to claim 1.

Combined soil-working machine for tilling by the means of a reversible plough, pre-seeding soil preparation and seeding contains a great deal of new solutions, some of which are:
1. Tow hitch with a tow-ball that are attached to a hydraulic cylinder and enable the machine to attain alterable positions that, in case of equipment usage on the inclined terrain, enable the position to be changed from the far left to the far right,
2. 2. Supporting holders that attach the tractor's differential to the horizontal carrier of the tow-ball which is mounted on a tow hitch that give stability to the frame and the machine by suspending vertical dragging forces of the combined machine,
3. 3. Stripe cleaners that are positioned behind the larger roller for clod crushing and grinding of the soil, and are constructed to prevent clogging of the sickle-like teeth with dirt due to its construction and larger space between two cleaners,
4. 4. Sickle-like teeth formed on the roller for clod crushing and grinding of the soil have a triangular cross section with blades pointing forward which are designed for crushing and tearing the soil by expanding it,
5. 5. Vibrating plates for soil stabilization on their bottom faces have a shield fabricated out of stainless steel which purpose is to prevent the corrosion of elements and protect the elements from extensive tearing and wearing during usage,
6. 6. Reservoir of the planter, which is of large capacity, is attached to a combined machine in order to relieve the tractor from the excess load and for the purpose of improving soil processing quality,
7. 7. Seed depositors and shutters of the planter are positioned on the frame and are attached to it by means of a hinge joint and adjustable spring loaded bolt, where the seed depositor, when in working position, is positioned with its top placed below the earth level thus making the furrow in which it deposits the seed while the steel shutter covers the seed with earth,
8. 8. Transportation wheels for manipulation in situ, that is for raising and lowering of the machine, to allow pulling of the machine while in transport on the road or field as well as operating the equipment when the tools for soil-work are raised and don't come in contact with the ground. Wheels are positioned in such a manner that the machine's load centre lifts the tractor in order to relieve it's tires from the excess load.
9. 9. Actuation assembly which drives separate tool elements is actuated by the bigger roller for rough soil grinding which has enough energy to drive the chains and sprocket wheels for actuating reservoir for artificial fertilizer and drive of the eccentric shaft for driving vibrating plates.

Present invention - combined soil-working machine for tilling with a reversible plough, pre-sowing soil preparation and sowing, according to this application has multiple advantages, some of which are:
Reducing the number of required passes per acre of processed land, and, in particular, eliminating the necessity of passing upon an already tilled soil which significantly decreases soil compacting,
Simultaneous performing of tilling and pre-sowing soil preparation which preserves the soil moisture,

As the tractor always passes upon the relatively stable soil, the consumption of energy and power used for its self-actuation and for so called "empty motion" (manoeuvring while the soil isn't processed) is smaller which, in turn, preserves fuel and machine and personnel labour hours needed. Simultaneous processing and sowing provides favourable conditions for plant thriving, development of the roots and other microbiological activities that contribute to greater crop yields and overall quality of the crops.

By performing seven operations in a single pass, necessary number of tractors and drivers per square meter is decreased thus increasing the productivity,

Combined soil-working machine is completely assembled out of domestically fabricated parts, so no import of parts and assemblies is necessary.

From the constructional standpoint, the machine is simple and easy for handling, maintaining and overhauling.

Machine is extremely economical when in exploitation.

Machine is eco-friendly as the decrease in the number of passes required contributes to environment protection due to the shortened time the tractor's engine is in operation.

### Brief explanation of drawings

For the purpose of easier understanding as well as presenting a way of practical implementation, the Applicant refers to the enclosed drawings in which:
- Figure 1 shows a combined soil-working machine for tilling by means of a reversible plough, soil preparing and sowing, according to the present invention, in general and in vertical projection,
- Figure 2 shows a combined soil-working machine from the Figure 1, with the roller and plough positioned in the far left position, in horizontal projection,
- Figure 3 shows a combined soil-working machine from the Figure 2 in cross- sectional view along the A-A line,
- Figure 4 shows an enlarged view of the tools assembly of a machine from the Figure 1 in vertical projection, Figure
- 5 shows details of a sickle-like tooth formed on a large cylinder shown on Figure 4 in vertical projection,
- Figure 5a shows sickle-like tooth from the Figure 5 in horizontal projection,
- Figure 6 shows cleaner of the grinding tool from the Figure 4 in vertical projection, -
- Figure 6a shows cleaner of the grinding tool from the Figure 6 in horizontal projection,
- Figure 7 shows an assembly of the sliding seed depositor and shutter from the Figure 4,
- Figure 8 shows a variant embodiment of a combined soil-working machine for tilling with a soil-inverting plough, according to the present invention, only for a step of soil preparation, in general and in vertical projection,
- Figure 9 shows a combined soil-working machine from the Figure 8 with the roller and plough positioned in the far right position, in horizontal projection,
- Figure 10 shows an enlarged view of a tools assembly of a machine with an actuation assembly from the Figure 9,
- Figure 11 shows a carrier frame of a soil-working machine in a horizontal projection.

### Detailed description of the invention

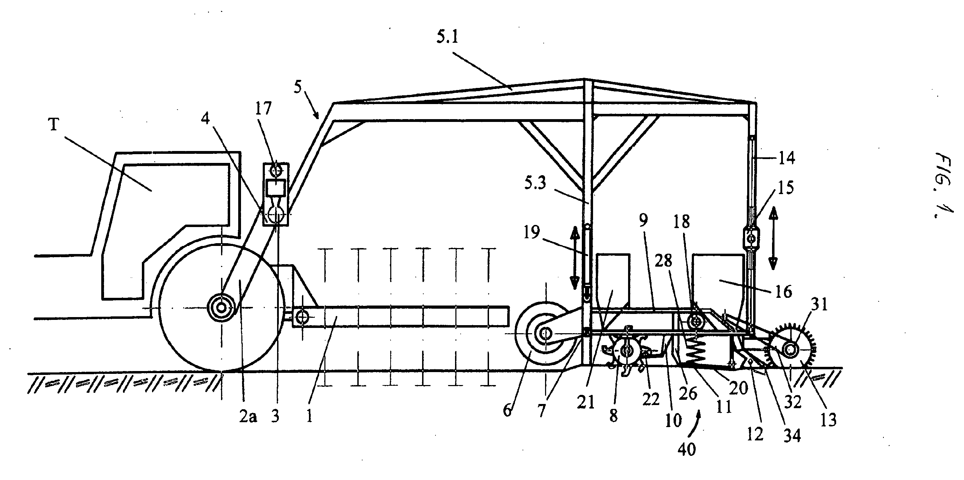

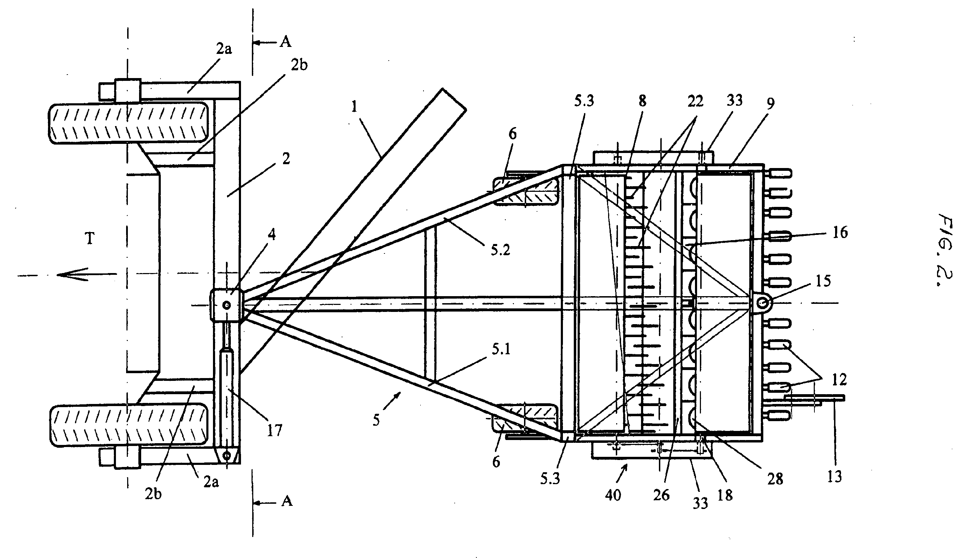

A combined soil-working machine for tilling by means of a reversible plough, soil preparation and sowing, according to the present invention and the accompanying Figures 1 and 2, comprising a reversible plough 1 attached via a three-point hitch (three-point linkage) behind the tractor TI frame 5 attached to the sleeves of a semi-axles of rear tractor's T wheels and tools assembly 40 attached to the frame 5 behind the plough 1.

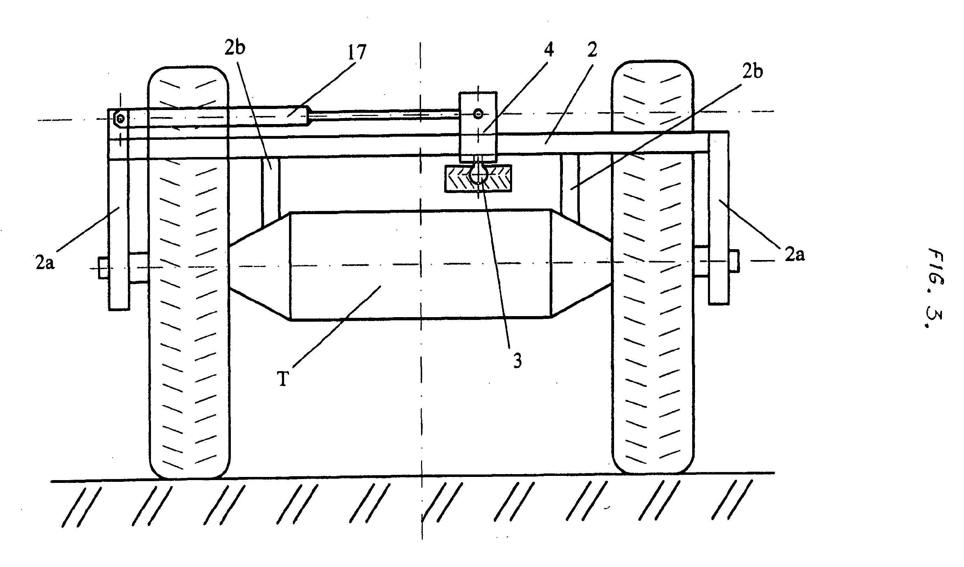

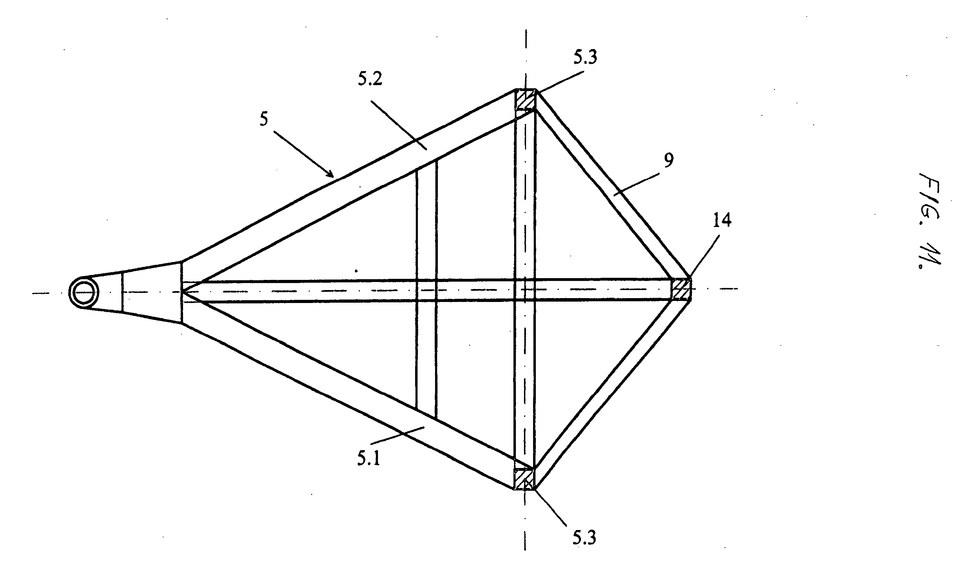

Grated frame 5, on whose rear end tools assembly 40 is attached to, is made out of mutually welded pipes of a circular or rectangular cross section. Said grated frame 5 is on its front end attached, via two horizontal inclined attaching levers 5.1, 5.2, to a movable tow-ball 3 placed on a tow hitch 4 (Figure 11). Tow hitch 4 with a tow-ball 3 (Figures 1, 2 and 3) is located on a horizontally attached hydraulic cylinder 17, which enables swivelling of the machine in such a way that in case of inclined, steep terrains said position can be adjusted from the far left to the far right position.

By displacing of a tow hitch 4 by means of a hydraulic cylinder 17 to the left or right, the tools assembly 40 is also displaced to the far right or the far left position depending on the working position of the plough 1. Hydraulic cylinder 17 with a tow hitch 4 is positioned on a horizontal carrier 2 which is, at its ends, fixed to the upper ends of vertical carriers 2a placed on the outside of the tractor. Carriers 2a are at its lower ends placed on sleeves of semi-axles of rear wheels of the tractor T. The carrier 2 is by means of two support holders 2b, which are set on the inner side of tractor's T wheels, attached to the differential. Mounting and dismounting of a combined soil-working machine from the tow-ball 3, which is from the carrier 2 of a tractor T is simple and quick. The role of the supporting holders 2b which connect the tractor's T differential with the horizontal carrier 2 of a tow hitch 4 is to keep the stability of the frame 5 and the machine itself, by suspending the dragging vertical forces effected on the combined machine.

On the rear end of the frame 5, behind the plough 1 (schematically shown), there are attached vertical carriers 5.3 which bottom ends are fixed to a front of a horizontal chassis 9 for carrying of the assembly 40, where the tools assembly 40 is located within the said horizontal chassis 9. On the bottom end 7 of the said carrier 5.3 there are attached transportation wheels 6. Also, on the carriers 5.3 there are attached hydraulic cylinders 19 for raising and lowering of the tools assembly 40 and for resting of this machine assembly on the ground on the wheels 6 while transporting and manipulatingto/from the acres or even manipulating the machine in situ while soil-working. Wheels are placed in such a manner so that the load centre of the assembly 40 lifts the tractor upwards thus lifting the load from the tractor's tires. Rear end of the horizontal chassis 9 is centrally attached to the frame 5 via vertically placed lever 14 with the nut 15 which determines the machine's position and the depth of the soil processing.

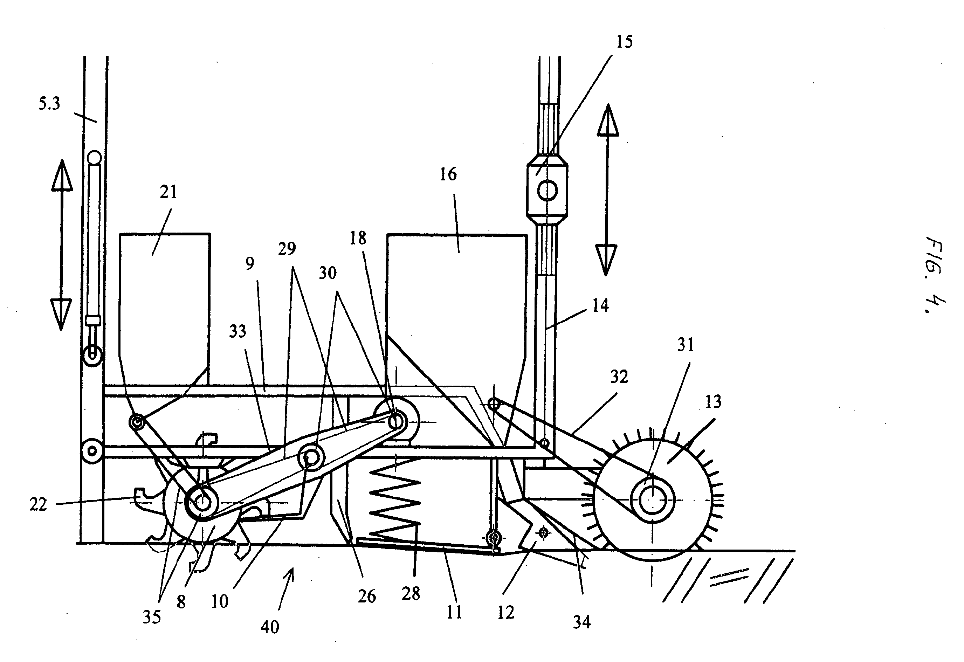

According to the technological process, that is the optimal agro-technical operations and the present invention (Figures 1 and 4), assembly 40 with an array of tools is placed mainly within the chassis 9. Viewed in the direction of moving of the frame during usage, in the front of the chassis 9, and behind the holders 7 of the wheels 6, there is attached a large hollow roller 8 with a sickle-like teeth 22. Teeth 22 formed on the roller 8 are dimensionally greater and are positioned wider-apart in order to perform rough soil preparation. Said sickle-like tooth 22 formed on the roller 8 for grinding of the soil have a triangular cross section while the blade 22a is directed in the direction of moving of the tractor T. These teeth crush and tear the soil by spreading it.

Behind the large roller 8, and partly behind it's sickle-like teeth 22, there is an array of parallel stripe cleaners 10 which are steeped front and downwards and which enter the space in-between the teeth 22 thus cleaning the roller 8. Above and somewhat in front of said roller 8, which performs grinding of the soil, there is an artificial fertilizer reservoir 21 attached, the so called "dozer".

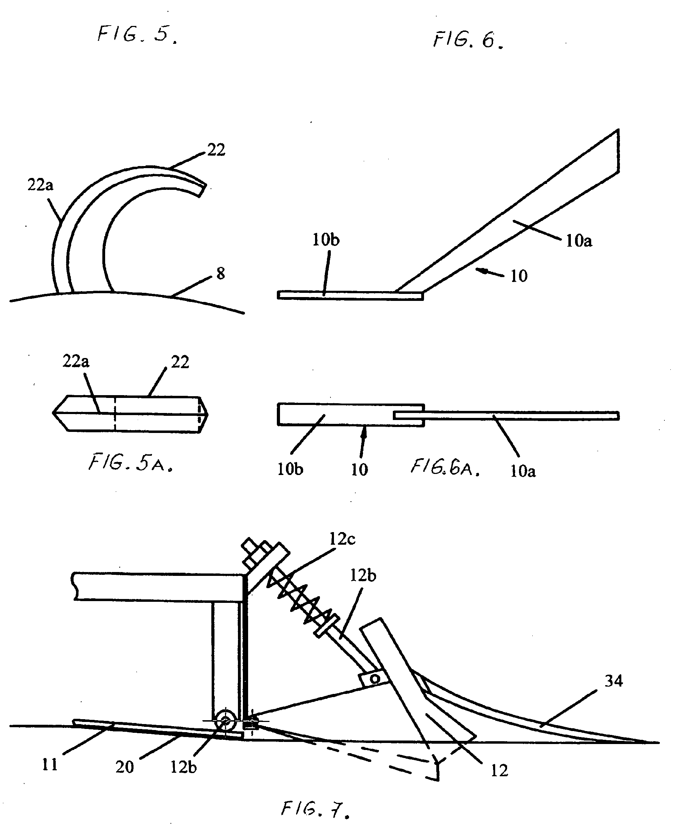

Stripe cleaners 10 which by partly entering the space between teeth 22 perform the cleaning (Figures 6 and 6a) consist out of two parts. When viewed in working position (Figure 6), cleaner 10 consists out of a vertically oriented wider part 10a and a thinner part lob which is horizontally oriented and fixed to the bottom of the part 10a. Said stripe cleaners 10 behind the larger roller 8 for rough soil grinding are constructed in such a way not to allow clogging with plant remains and dirt due to their geometry and larger space between the two neighbouring cleaners.

Right behind the row of said cleaners 10 there is a rectangular, planar and slightly back-stooped soil leveler 26 whose purpose is to roughly level-out soil unevenness while preventing the soil from being thrown on top of the vibrating plates 11 that are placed right behind him.

Vibrating plates 11 for soil stabilization have, on their bottom faces, attached a shield 20 made out of stainless steel whose purpose is to prevent wear and tear of the plates 11, and this presents a special novelty of the invention. Based on the choice of material used the shield is resistant to corrosion, needs no lubrication so it can operate in very humid soils. Vibrating plates 11 (there are eight plates in the shown embodiment) are mutually identical and of rectangular shape with their front ends (front in respect of the direction of tractor motion) slightly upward inclined. Each vibrating plate 11 has a strong cylindrical spring 28 attached to its top side. Each spring 28 is on its top fixed to the housings of the bearings of the eccentric shaft 18. Eccentric shaft 18 receives it's actuation from the sprocket wheel that will be discussed later. Eccentric shaft 18 is placed in the ball bearings to allow rotation, while the cams of the shaft 18 can be adjusted in such a way to achieve alternated "thumping" of said plates 11 on the ground in order to balance the entire assembly. Said vibrating plates 11 perform the final preparation of the soil for sowing by compacting and leveling.

Above and somewhat behind the vibrating plates 11 (Figure 4) there is a sowing aggregate, that is a reservoir 16 of a planter beneath which is a conveyer, that is a sliding seed depositor 12 which conducts the seeds and deposits them in the ground. Planter reservoir 16 which is of large capacity is placed on a combined machine in order to relieve the tractor and to improve the quality of soil-working. On top of the sliding seed depositor 12 (Figure 7) a shutter 34 is fixed which has a shape of a steel leaf and whose purpose is to close the furrow after the seed has been deposited thus covering the seed with earth. The top of the seed depositor 12 doesn't go into the soil and it is held by a hinge joint 12a thus no earth can get stuck to the depositor 12. Depositor 12 and shutter 34 are attached to the chassis 9 by means of a hinge joint 12a and an adjustable spring12c loaded bolt 12b. Depositor 12 when in working position is such placed that it's top is below the earth level and it makes a furrow in which it deposits the seed while the steel shutter 34 closes the furrow thus covering the seed with earth. In order to eject the seed from the reservoir 16 and into the depositor 12, a well-known chain transmission is used, which in this case consist of a sprocket chain 32 and a sprocket wheel 31 placed on an actuator wheel 13 of the planter.

Actuation assembly 35, 29, 30, 33 which actuates certain elements of the tools (Figure 4) receives it's actuation from the bigger roller 8 for soil grinding and clod crushing which has enough power to drive the chains and sprockets in order to drive the artificial fertilizer reservoir 21 and to drive the eccentric shaft 18 in order to actuate vibrating plates 11. The assembly 35 comprising chain and sprocket for driving the artificial fertilizer reservoir 21. Actuation assembly 29, 30, 33 for driving the eccentric shaft 18 and vibrating plates I I comprising a junction box 33 within the chains 29 and sprockets 30 are housed.

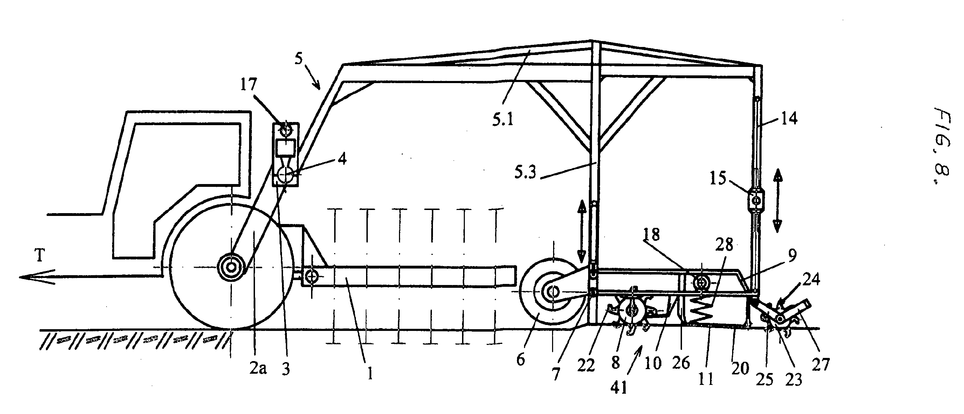

According to a variant embodiment of the present invention and Figure 8, combined soil-working machine can be made with tilling and with soil-preparation only, while in the autumn a deep ploughing or pre-sowing tilling and fertilizing must be conducted. On the bottom end 7 of the carrier 5.3 there are transport wheels 6 attached while on the said carrier 5.3 itself there are placed hydraulic cylinders 19 for raising/lowering of the assembly 41 and resting of this assembly on the ground on wheels while in transport to and from the acres or during the in situ manipulation. Back .end of the horizontal chassis 9 is centrally connected to the frame 5 by a vertically oriented lever 14 whose height can be adjusted by means of a nut 15.

According to the previous description of a preferred embodiment and according to I the specific technological process and embodiment variant, the assembly 41 with an array of tools is placed within the chassis 9. Viewed in the direction of the moving of the machine during operation, in front of said chassis 9 and behind the end 7 and wheels 6 I there is positioned a big hollow roller 8 with sickle-like teeth 22. Above and somewhat in I front of said roller 8 for clod crushing and rough soil grinding there is an artificial fertilizer I reservoir 21, the so called "dozer". Behind the said roller 8 and partly between its sickle- like teeth 22 there is an array of mutually parallel stripe cleaners 10 which are steeped in front and in downward direction and which enter the space between the teeth 22 in order I to clean the roller 8.

Right behind the row of said cleaners 10 there is a rectangular, planar and slightly back-stooped soil leveler 26 whose purpose is to roughly level-out soil unevenness while preventing the soil from being thrown on top of the vibrating plates 11 that are placed behind. Vibrating plates 11 for soil stabilization on their bottom faces have a shield 20 attached. Said vibrating plates (in this embodiment there are eight of them) are mutually identical and are of rectangular shape with their front ends (front in respect of the direction of tractor motion) slightly upward inclined. Each plate 11 is connected to a strong cylindrical spring 28 which are connected to their appropriate housings of the bearings of the eccentric shaft 18 that receives it's actuation from the sprocket wheel. Eccentric shaft is placed in the ball bearings to allow rotation while the cams of the shaft 18 can be adjusted in such a way to achieve alternated "thumping" of said plates 11 on the ground in order to balance the entire assembly. Said vibrating plates 11 perform the final preparation of the soil for sowing by compacting and levelling.

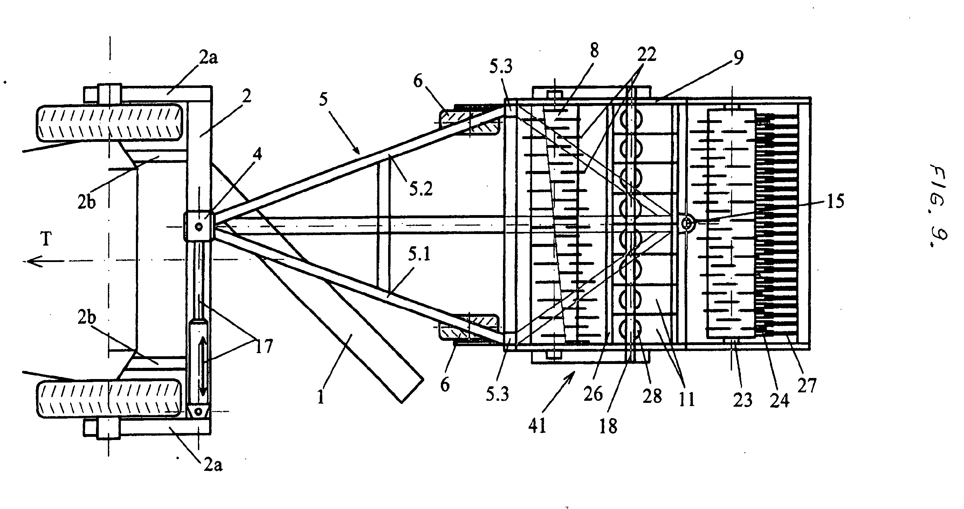

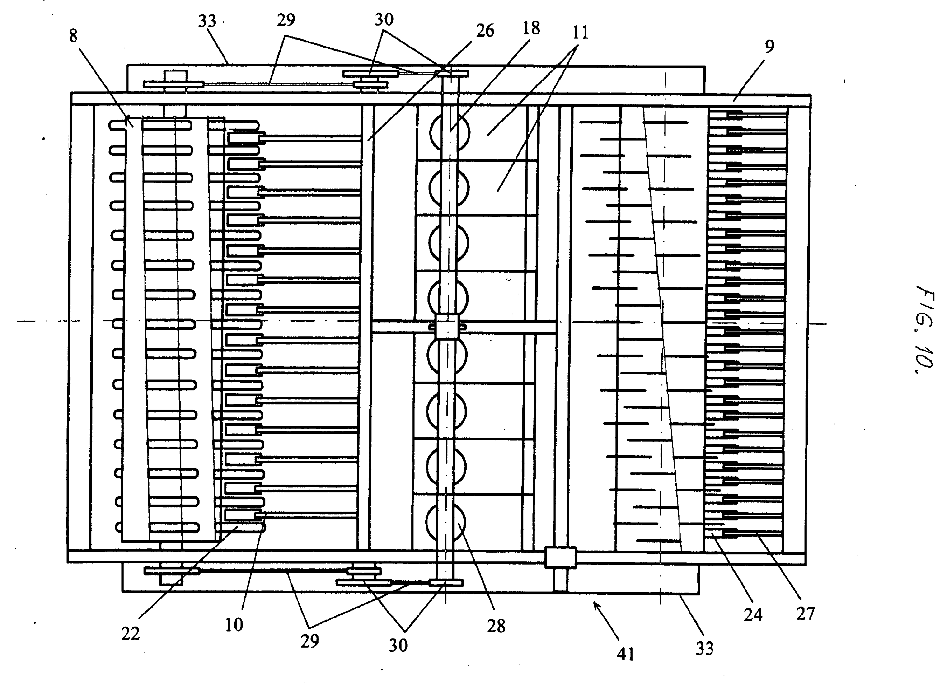

What presents a special novelty of the present invention in this embodiment (shown on Figures 8 to 10) is that within the assembly 41 there is a small roller 23 attached on the end for fine soil grinding in order to prepare the soil and prevent crust forming. Roller 23 is fixed by means of the carrier 25 to a chassis 9 and is set outside said chassis 9. On the roller 23 there is fixed a series of sickle-like teeth 24 that are longitudinally oriented and evenly spaced. Behind the said roller 23 on a special carrier there are placed cleaners 27 of the small roller which enter the space between said teeth 24 thus cleaning the said roller 23.

The principle of operation of the combined soil-working machine for tilling by means of a reversible plough, soil-preparing and sowing, and according to the present invention, is simple and in an obvious way originates from the previous description and appended drawings so there is no need to further explain it. However, it is worthwhile pointing out that due to the specific constructional solution of the hitching hook 4 with the hydraulic cylinder 17 which are placed on the horizontal carrier 2 and which present yet another special novelty of present invention, it is possible to place combined soil-working machine in a variety of sets of positions, specifically when the soil-working is done on the inclined terrain. These positions can vary from the far left, over the center to the far right position of the reversible plough 1. So, when the said cylinder 17 with the said hook 4 is placed in the far left position, the soil-working machine is also in its far left position, while the left wheel of the tractor T (when viewed in the direction of tractor motion when in operation) is in a furrow next to previously processed earth. In this case the plough is placed in its left working position. When the said cylinder 17 with the said hook 4 is placed in the far right position, the soil-working machine is also in its far left position, while the right wheel of the tractor T (when viewed in the direction of tractor motion when in operation) is in a furrow next to previously processed earth. In this case the plough is placed in its right working position.

### Industrial applicability

The applicability of the present invention is clear and obvious from the previous description. That is, to successfully apply the present invention in the practice there is no need to possess some special knowledge, directions of implementation or experiences. The knowledge that an averagely skilled person in the art possesses is both necessary and sufficient to successfully apply present invention based on the given description. All constructional characteristics of the present invention the Applicant has successfully tested on the built prototype.

## Claims

1. Combined soil-working machine for tilling by means of a reversible plough, fertilizing, soil preparing, stabilizing and sowing of crops, comprising a reversible plough (1) attached to the tractor (T) via a three-point linkage, a frame (5) with the chassis (9) attached to the sleeves of the rear wheels semi-axles of the tractor (T), and tools assembly (40), and that the assembly (40) which is placed mainly within the chassis (9) comprising big hollow roller (8) with sickle-like teeth (22) for rough grinding of soil, an artificial fertilizer reservoir (21) placed above and somewhat in front of the said roller (8), an array of mutually parallel stripe cleaners (10) placed in-between said sickle-like teeth (22), a rectangular, planar and slightly back-stooped soil levelling plate (26) placed right behind the row of said cleaners (lo), vibrating plates (1 1) for soil stabilization placed behind the said levelling plate (26), a reservoir (16) of the planter placed above and behind the said vibrating plates (1 1 and the actuation assembly (35; 29, 30, 33) for driving the said artificial fertilizer reservoir (21) and the eccentric shaft (18).

2. Combined soil-working machine according to the Claim 1, further **characterized in that**, the grated frame (5) is at its front end attached by two horizontally oriented inclined levers (5.1, 5.2) to the moveable tow-ball (3) placed on a tow hitch (4), that said tow hitch (4) with said tow-ball (3) is placed on a horizontally oriented hydraulic cylinder (17), that said hydraulic cylinder (1 7) with said tow hitch (4) is placed on a horizontal carrier (2), that said carrier (2) is at its ends attached to the upper parts of the vertical carrier (2a) placed on the outside of the tractor (T), where the carriers (2a) are at its bottom ends attached to the sleeves of the rear wheels semi-axles of the tractor (T)-and by means of two support holders (2b) placed on the inner sides of the wheels of the tractor (T) connected to the tractor's (T) differential, that in the rear end of the frame (5), behind the plough (I), are attached vertical carriers (5.3) whose bottom ends are fixed to the front end of the horizontal chassis (9) for carrying of the assembly (40), that on the said carriers (5.3) there are placed hydraulic cylinders (19) for raising and lowering of said assembly (40), while at the bottom end (7) of the carrier (5.3) transporting wheels (6) are placed and that the rear end of the horizontal chassis (9) is centrally connected to the frame (5) by means of the vertically placed lever (14) with the nut (15) for adjusting the machine's placement and the depth of soil processing.

3. Combined soil-working machine according to the Claim 1, further **characterized in that**, the assembly (40), which is placed mainly within the chassis (9), comprising a large hollow roller (8) with sickle-like teeth (22), where said teeth (22) are larger and are placed on said roller (8) wider apart the sickle-like teeth (24) on the said small roller (23).

4. Combined soil-working machine according to the Claim 3, further **characterized in that**, the sickle-like teeth (22) are of triangular cross section with the blade (22a) pointing in the direction of the tractor (T) movement and that behind the roller (8) and partly in between its sickle-like teeth (22) there exists an array of mutually parallel stripe cleaners (10) which are steeped front and downwards.

5. Combined soil-working machine according to the Claim 1, further **characterized in that**, the stripe cleaners (10) are arranged out of the vertically placed wider part (10a) and the thinner part (lob) while the said part (lob) is horizontally placed and fixed to the bottom of the said part (10a).

6. Combined soil-working machine according to the Claim 1, further **characterized in that**, behind the soil levelling plate(26) there are placed a vibrating plates (11) for soil stabilization which, on their bottom sides, have a shield (20) made out of stainless steel attached in order to reduce wear and tear of the said plates (1 1) during usage and are of rectangular shape with the front end (front in respect of the direction of tractor motion) slightly upward inclined, and that each vibrating plate (1 1) is at it's upper side connected to a cylindrical spring (28), which are at their upper ends connected to their respective housings of ball bearings of the eccentric shaft (18) while the cams of the said eccentric shaft (18) are adjusted in such a way to achieve alternated "thumping" of said plates (1 1) on the ground.

7. Combined soil-working machine according to the Claim 1, further **characterized in that**, the assembly (35) consists out of a chain and sprocket wheel to actuate the artificial fertilizer reservoir (21) and that the actuation assembly (29, 30, 33) for driving the eccentric shaft (18) and for driving the vibrating plates (11) consists out of a junction box (33) within which the chains (29) and sprockets (30) are housed.

8. Combined soil-working machine according to the Claim 1, further **characterized in that**, above and somewhat behind of the vibration plates (1 1) there is a reservoir (16) of the planter under which the sliding seed depositor (12) is arranged, and that on top of said depositor (12) there is fixed a shutter (34) in form of a steel leaf for closing the furrow and covering the seed with earth, that the said seed depositor (12) is attached to the chassis (9) by means of the joint hinge (12a) and adjustable spring (12c) loaded bolt (12b), and that the reservoir (16) is connected to the actuation wheel (13) of the planter by means of the chain (32) and sprocket (31).

9. Combined soil-working machine for tilling by means of a reversible plough soil preparing and stabilizing according to Claims 2 to 8 and a variant embodiment, further **characterized in that**, within chassis (9) there is a tools assembly (41) attached, that within said tools assembly (41) at the end there is arranged a small roller (23) for fine soil graining and preparing, that said roller (23) is attached to the outside of the chassis (9) by means of the carrier (25), that on said roller (23) there is arranged a number of longitudinally placed and equally spaced apart sickle-like teeth (24) and that behind said roller (23) placed on a special carrier there is arranged an array of cleaners (27) of the small roller (23) which enter the space between said sickle-like teeth (24) cleaning it.

## Patentansprüche

1. Kombinierte Landmaschine zur Bodenbearbeitung mit Hilfe eines umkehrbaren Pflugs, zum Düngen, zur Bodenaufbereitung, Stabilisierung und zum Säen von Getreidearten, bestehend aus einem umkehrbaren Pflug (1) der mit dem Traktor (T) über ein Dreipunkt-Gestänge verbunden ist, einem Rahmen (5) wobei das Fahrgestell (9) an die Hülsen der Hinterrad-Halbachswellen des Traktors (T), und einer Werkzeugbaugruppe (40), und dass diese Baugruppe (40) die sich weitgehend innerhalb des Fahrgestells (9) befindet, bestehend aus einer großen, hohlen Walze (8) mit sichelförmigen Zinken (22) für die Zerkleinerung von Boden, einem Kunstdünge-Behälter (21) der sich über und etwas vor der erwähnten Walze (8) befindet, einer Reihe von gegenseitig parallelen Abstreifern (10) angeordnet zwischen den erwähnten sichelförmigen Zinken (22), einer rechteckigen, ebenen und leicht nach honten gebogenen Bodenglättungsplatte (26) angeordnet direkt hinter der besagten Reihe von Abstreifern (10), Schwingungsblechen (11) zur Bodenverfestigung, angeordnet hinter der besagten Glättungsplatte (26), einem Behälter (16) der Ablage der über und hinter den besagten Schwingungsblechen (11) angeordnet ist und der Betätigungsbaugruppe (35; 29, 30, 33) für den Antrieb des besagten Kunstdüngerbehälters (21) und der Exzenterwelle (18).

2. Kombinierte Landmaschine nach Anspruch 1, ferner **dadurch gekennzeichnet, dass** der gitterförmige Rahmen (5) an seinem vorderen Ende durch zwei horizontal ausgerichtete geneigte Hebel (5.1, 5.2) an der verstellbaren Schleppkugel (3) die auf einer Anhängevorrichtung (4) angeordnet ist, befestigt wird, dass diese Anhängevorrichtung (4) mit der besagten Schleppkugel (3) sich auf einem horizontal ausgerichteten hydraulischen Zylinder (17) befindet, dass sich dieser hydraulische Zylinder (17) mit der besagten Anhängevorrichtung (4) auf einem horizontalen Träger (2) befindet, dass dieser Träger (2) an seinen Enden an die oberen Teile des vertikalen Trägers (2a) angeordnet an der Außenseite des Traktors (T) befestigt ist, wobei die Träger (2a) an ihren unteren Enden an den Hülsen der Hinterrad-Halbachswellen des Traktors (T) befestigt ist-und mit Hilfe zweier Abstützhalter (2b) angeordnet auf der Innenseite der Räder des Traktors (T) verbunden mit dem Differenzialgetriebe des Traktors (T), dass am hinteren Ende des Rahmens (5), hinter dem Pflug (I), vertikale Träger (5.3) befestigt sind, deren untere Enden an das vordere Ende des horizontalen Fahrgestells (9) zum Tragen der Baugruppe (40) befestigt sind, dass auf diesen Trägern (5.3) hydraulische Zylinder (19) zum Anheben und Senken der besagten Baugruppe (40) angeordnet sind, während am unteren Ende (7) des Trägers (5.3) Transporträder (6) angeordnet sind und dass das hintere Ende des horizontalen Fahrgestells (9) mittig mit dem Rahmen (5) verbunden durch einen vertikal ausgelegten Hebel (14) mit einer Mutter (15) zum Justieren der Maschinenposition und Bodenbearbeitungstiefe.

3. Kombinierte Landmaschine nach Anspruch 1, ferner **dadurch gekennzeichnet, dass** die Baugruppe (40), die sich weitgehend im Fahrgestell (9) befindet, bestehend aus einer großen, hohlen Walze (8) mit sichelförmigen Zinken (22), wobei diese Zinken (22) größer sind und auf der Walze (8) weiter auseinander angeordnet sind als die sichelförmigen Zinken (24) auf der besagten kleinen Walze (23).

4. Kombinierte Landmaschine nach Anspruch 3, ferner **dadurch gekennzeichnet, dass** die sichelförmigen Zinken (22) einen dreieckigen Querschnitt haben und dass die Schneide (22a) in die Fahrrichtung des Traktors (T) zeigt und dass sich hinter der Walze (8) und teilweise zwischen deren sichelförmigen Zinken (22) eine Reihe von gegenseitig parallelen Abstreifern (10) befindet, die nach vorne und unten gebogen sind.

5. Kombinierte Landmaschine nach Anspruch 1, ferner **dadurch gekennzeichnet, dass** die Abstreifer (10) vertikal außerhalb des breiteren Teils (10a) und des dünneren Teils (lob) angeordnet sind, wobei der besagte Teil (lob) horizontal angeordnet und an der Unterseite des besagten Teils (10a) angeordnet ist.

6. Kombinierte Landmaschine nach Anspruch 1, ferner **dadurch gekennzeichnet, dass** sich hinter der Bodenglättungsplatte (26) Schwingungsbleche (11) zur Bodenverfestigung befinden, an deren Unterseite ein Schirm (20) aus Edelstahl befestigt ist, der den Verschleiß dieser Bleche (11) während des Gebrauchs verringert, und deren Form rechteckig ist, wobei das vordere Ende (vordere in Bezug auf die Fahrtrichtung des Traktors) leicht nach oben geneigt ist, und dass jedes Schwingungsblech (11) an seiner Oberseite mit einer zylindrischen Federung (28) verbunden ist, die wiederrum an ihren oberen Enden mit den entsprechenden Kugellagergehäusen der Exzenterwelle (18) verbunden sind wobei die Nocken dieser Exzenterwelle (18) so angepasst sind dass ein wechselndes "Trommeln" der besagten Bleche (11) auf dem Boden erreicht wird.

7. Kombinierte Landmaschine nach Anspruch 1, ferner **dadurch gekennzeichnet. dass** die Baugruppe (35) aus einer Kette und Kettenrad zur Betätigung des Kunstdüngerbehälters (21) besteht und dass die Betätigungsbaugruppe (29, 30, 33) zum Antrieb der Exzenterwelle (18) und der Schwingungsbleche (11) aus einem Anschlusskasten (33) besteht in dem die Kette (29) und Kettenräder (30) untergebracht sind.

8. Kombinierte Landmaschine nach Anspruch 1, ferner **dadurch gekennzeichnet, dass** sich über und etwas hinter den Schwingungsblechen (11) ein Behälter (16) der Ablage befindet, unter dem die verschiebbare Samenablage (12) angeordnet ist, und dass auf der besagten Samenablage (12) ein Verschluss (34) in Form eines Stahlblatts zum Schließen der Furchen und Eindecken der Samen mit Erde befestigt ist, dass die besagte Samenablage (12) an Fahrgestell (9) mit einem Gelenkscharnier (12a) und einem verstellbaren federbelasteten (12c) Bolzen (12b) befestigt ist, und dass der Behälter (16) mit dem Betätigungsrad (13) der Ablage mit einer Kette (32) und einem Kettenrad (31) verbunden ist.

9. Kombinierte Landmaschine zum Säen mit Hilfe eines umkehrbaren Pflugs, zur Bodenaufbereitung und -verfestigung nach Ansprüchen 2 bis 8 und eine mögliche Ausführung,/ferner **dadurch gekennzeichnet, dass** im Fahrgestell (9) eine Werkzeugbaugruppe (41) befestigt ist, dass in dieser Werkzeugbaugruppe (41) an einem Ende eine kleine Walze (23) für die Feinzerkleinerung und Aufbereitung der Böden angeordnet ist, dass die besagte Walze (23) an der Außenseite des Fahrgestells (9) mittels eines Trägers (25) befestigt ist, dass auf dieser Walze (23) eine Anzahl von längsseitig ausgerichteten und gleichmäßig entfernten sichelförmigen Zinken (24) angeordnet ist und dass hinter dieser Walze (23) auf einem besonderen Träger liegend eine Reihe von Abstreifern (27) der kleinen Walze (23) angeordnet ist, die in den Bereich zwischen den sichelförmigen Zinken (24) hineinragen und diese so reinigen.

## Revendications

1. Machine de travail du sol combinée pour labourer au moyen d'une charrue réversible, fertiliser, préparer le sol, stabiliser et semer les cultures, comprenant une charrue réversible (1) fixée au tracteur (T) par l'intermédiaire d'un attelage trois points, un cadre (5) avec le châssis (9) fixé aux manchons des demi-arbres de roues arrière du tracteur (T), et un ensemble d'outils (40), l'ensemble (40) qui est placé principalement à l'intérieur du châssis (9) comprenant un grand rouleau creux (8) avec des dents du type faucille (22) pour le dégrossissage de sol, un réservoir d'engrais artificiel (21) placé audessus et un peu en avant dudit rouleau (8), un ensemble de nettoyeurs en bandes mutuellement parallèles (10) placé entre lesdites dents du type faucille (22), une plaque de nivellement du sol rectangulaire, plane et légèrement abaissée en arrière (26) placée juste derrière la rangée desdits nettoyeurs (lo), des plaques vibrantes (11) pour la stabilisation des sols placées derrière ladite plaque de nivellement (26), un réservoir (16) du semoir placé au-dessus et derrière lesdites plaques vibrantes (11) et l'ensemble d'actionnement (35; 29, 30, 33) pour entraîner ledit réservoir d'engrais artificiel (21) et l'arbre d'excentrique (18).

2. Machine de travail du sol combinée selon la revendication 1, **caractérisée en outre en ce que**, le cadre à grille (5) est au niveau de son extrémité avant fixé par deux leviers inclinés orientés horizontalement (5.1, 5.2) vers la boule d'attelage mobile (3) située sur un crochet d'attelage (4), ledit crochet d'attelage (4) avec ladite boule d'attelage (3) est placé sur un vérin hydraulique orienté horizontalement (17), ledit vérin hydraulique (17) avec ledit crochet d'attelage (4) est placé sur un support horizontal (2), ledit support (2) est au niveau de ses extrémités fixé à des parties supérieures du support vertical (2a) situées à l'extérieur du tracteur (T), les supports (2a) étant au niveau de leurs extrémités inférieures fixés aux manchons des demi-arbres de roues arrière du tracteur (T) et au moyen de deux porte-supports (2b) placés sur les côtés internes des roues du tracteur (T) reliés au différentiel du tracteur (T), **en ce que** dans l'extrémité arrière du cadre (5), derrière la charrue (I), sont fixés des supports verticaux (5.3) dont les extrémités inférieures sont fixées à l'extrémité avant du châssis horizontal (9) pour porter l'ensemble (40), **en ce que** sur lesdits supports (5.3) sont placés des vérins hydrauliques (19) pour élever et abaisser ledit ensemble (40), tandis qu'à l'extrémité inférieure (7) du support (5.3) des roues de transport (6) sont placées et **en ce que** l'extrémité arrière du châssis horizontal (9) est reliée au centre du cadre (5) au moyen du levier placé verticalement (14) avec l'écrou (15) pour ajuster le placement de la machine et la profondeur de traitement du sol.

3. Machine de travail du sol combinée selon la revendication 1, **caractérisée en outre en ce que** l'ensemble (40), qui est placé principalement à l'intérieur du châssis (9), comprend un grand rouleau creux (8) avec des dents du type faucille (22), lesdites dents (22) étant plus grandes et placées sur ledit rouleau (8) plus écartées que les dents du type faucille (24) sur ledit petit rouleau (23).

4. Machine de travail du sol combinée selon la revendication 3, **caractérisée en outre en ce que** les dents du type faucille (22) sont de section transversale triangulaire, la lame (22a) pointant dans la direction de déplacement du tracteur (T) et **en ce que**, derrière le rouleau (8) et en partie entre ses dents du type faucille (22), il existe un ensemble de nettoyeurs en bandes mutuellement parallèles (10) qui sont inclinés à l'avant et vers le bas.

5. Machine de travail du sol combinée selon la revendication 1, **caractérisée en outre en ce que** les nettoyeurs de bande (10) sont placés sur la partie plus large placée verticalement (10a) et la partie plus mince (lob), tandis que ladite partie (lob) est horizontalement placée et fixée sur la partie inférieure de ladite partie (10a).

6. Machine de travail du sol combinée selon la revendication 1, **caractérisée en outre en ce que**, derrière la plaque de nivellement du sol (26), sont placées des plaques vibrantes (11) pour la stabilisation du sol qui, sur leurs côtés inférieurs, ont un blindage (20) en acier inoxydable fixé afin de réduire l'usure desdites plaques (11) pendant l'utilisation et qui ont une forme rectangulaire, l'extrémité avant (avant par rapport à la direction de déplacement du tracteur) étant légèrement inclinée vers le haut, et **en ce que** chaque plaque vibrante (11) est au niveau de son côté supérieur reliée à un ressort cylindrique (28), qui sont au niveau de leurs extrémités supérieures reliées à leurs logements respectifs de roulements à billes de l'arbre excentrique (18) tandis que les cames dudit arbre excentrique (18) sont ajustées de sorte à atteindre un «battement » alterné desdites plaques (11) sur le sol.

7. Machine de travail du sol combinée selon la revendication 1, **caractérisée en outre en ce que** l'ensemble (35) comprend une roue à dents et pignons pour actionner le réservoir d'engrais artificiel (21) et **en ce que** l'ensemble d'actionnement (29, 30, 33) pour entraîner l'arbre d'excentrique (18) et pour entraîner les plaques vibrantes (11) comprend une boîte de jonction (33) à l'intérieur de laquelle les dents (29) et les pignons (30) sont placés.

8. Machine de travail du sol combinée selon la revendication 1, **caractérisée en outre en ce que**, au-dessus et un peu en arrière des plaques de vibration (11) se trouve un réservoir (16) du semoir sous lequel se trouve un dispositif de dépôt de graines coulissant (12), et **en ce que** sur ledit dispositif de dépôt (12) est fixé un obturateur (34) sous forme d'une feuille d'acier pour fermer le sillon et couvrir les graines avec de la terre, **en ce que** ledit dispositif de dépôt de graines (12) est fixé au châssis (9) au moyen de la charnière d'articulation (12a) et du boulon chargé (12b) de ressort réglable (12c), et **en ce que** le réservoir (16) est relié à la roue d'actionnement (13) du semoir par l'intermédiaire de la dent (32) et du pignon (31).

9. Machine de travail du sol combinée pour labourer au moyen d'une charrue réversible, préparer le sol et stabiliser selon l'une des revendications 2 à 8 et une variante de réalisation, **caractérisée en outre en ce que**, à l'intérieur du châssis (9) se trouve un ensemble d'outils (41) fixé, **en ce qu'**à l'intérieur dudit ensemble d'outils (41) au niveau de l'extrémité se trouve un petit rouleau (23) pour la préparation et le grainage fin du sol, **en ce que** ledit rouleau (23) est fixé à l'extérieur du châssis (9) au moyen du support (25), **en ce que** sur ledit rouleau (23) se trouve un certain nombre de dents du type faucille (24) placées longitudinalement et espacées de façon égale et **en ce que** derrière ledit rouleau (23) placé sur un support spécial se trouve un ensemble de nettoyeurs (27) du petit rouleau (23) qui pénètrent dans l'espace entre lesdites dents du type faucille (24) pour les nettoyer.
